Europäisches Patentamt

European Patent Office

Office européen des brevets

(19)

(11) Publication number: **0 182 480**
A2

# EUROPEAN PATENT APPLICATION

(12)

(21) Application number: **85307148.8**

(22) Date of filing: **07.10.85**

(51) Int. Cl.⁴: **B 60 G 3/20**, B 60 G 7/00

(30) Priority: **15.11.84 US 671833**

(43) Date of publication of application: **28.05.86 Bulletin 86/22**

(84) Designated Contracting States: **BE DE FR GB**

(71) Applicant: **FORD MOTOR COMPANY LIMITED, Eagle Way, Brentwood Essex CM13 3BW (GB)**

(84) Designated Contracting States: **GB**

(71) Applicant: **FORD-WERKE AKTIENGESELLSCHAFT, Ottoplatz 2 Postfach 21 03 69, D-5000 Köln 21 (DE)**

(84) Designated Contracting States: **DE**

(71) Applicant: **FORD FRANCE SOCIETE ANONYME, 344 Avenue Napoléon Bonaparte B.P. 307, F-92506 Rueil Malmaison Cedex (FR)**

(84) Designated Contracting States: **FR**

(71) Applicant: **Ford Motor Company, The American Road, Dearborn, MI 48121 (US)**

(84) Designated Contracting States: **BE**

(72) Inventor: **Fluegge, Jerry H., 3387 Glen Hill, Manitou Beach Michigan 49253 (US)**

(74) Representative: **Messulam, Alec Moses et al, A. Messulam & Co. 24 Broadway, Leigh on Sea Essex SS9 1BN (GB)**

(54) **Automotive suspension control arm.**

(57)    A control arm for an automotive suspension is formed from three basic elements namely a first arm element (16), a second arm element (18) and a central bushing assembly (24) to which the arm elements (16, 18) are rigidly attached. The central busing assembly (24) comprises means (30) for mounting on a wheel carrier (14) and other means (28) for controllably permitting wheel recession and resiliently resisting forward rotation of the wheel carrier during braking. The individual arm elements (16, 18) may be fabricated by a forging, casting, flame cutting, or other methods.

EP 0 182 480 A2

## AUTOMOTIVE SUSPENSION CONTROL ARM

This invention relates to an automotive suspension control arm.

Automotive suspension systems have been constructed with a multiplicity of control arm designs. This invention relates to control arms for use in independent suspension systems. Such systems have taken a variety of forms including single arm designs such as the MacPherson design, whereas other systems commonly use two control arms. An example of the latter design is the short-long-arm system of the type disclosed in a copending European Patent Appln. No. (based on US Serial No. 671,644). In the short-long-arm suspension system, the short arm is pivotally attached to an upper portion of the wheel carrier and the longer lower transverse arm is attached to a lower portion of the wheel carrier. Both arms are pivotally attached to the body or chassis at their inboard ends. This general arrangement of control arms has been employed with a variety of arm constructions. Stamped, forged, and formed wire constructions have been used. U.S. Patents 2,321,823, 2,845,279 and 2,886,341 disclose stamped control arms. U.S. Patents 2,083,627, 2,544,331, 2,605,118, 2,664,297, 2,674,450 and 2,996,311 disclose cast or forged constructions. Finally, U.S. patents 2,123,087, 2,717,152 and 4,170,373 disclose formed wire control arms. The present invention is suitable for forged, coined, cast or other methods of construction.

In accordance with the present invention there is provided an automotive suspension control arm as herein set forth in Claim 1.

0182480

The multi-piece construction of the control arm provides several advantages. First, in the event that one of the three constituent elements of the arm is damaged due to wear or a collision, replacement of the damaged element is possible while at the same time retaining the remaining two elements.

A second advantage offered by the multi-piece control arm resides in the fact that each of the two arm members may be formed with relative ease as compared to the single piece arm disclosed, for example, in U.S. Patent 4,170,373. Because the two arm members are much smaller than would be a single element having a total size equivalent to their combined dimensions, the two smaller elements are more easily handled in such processes as forging, casing or coining. The latter process, as disclosed in U.S. Patent 4,170,373, can advantageously be used to form the two arm element.

Yet another advantage of the multi-piece control arm arises from the resilient mounting provided by the central bushing assembly which is, as previously noted, mounted in the wheel carrier. In the preferred embodiment, the central bushing assembly is of asymmetrical construction, which allows the wheel carrier to recess in the event of impacts caused by objects in the road such as tar strips, etc. This asymmetry also permits the suspension to resist "brake dive".

The central bushing assembly also provides a rigid connection for the arm members to each other while additionally providing a pivotable resilient connection to the wheel carrier. The asymmetric operating characteristic of the central bushing assembly is provided by elastomeric components of varying shape and composition within the bushing assembly.

0182480

The invention will now be described further, by way of example, with reference to the accompanying drawings, in which:

Figure 1 is perspective view of an automotive suspension including a multi-piece control arm,

Figure 2 is a plan view of the suspension of Figure 1.

Figure 3 is a vertical section taken through the central bushing assembly and its attaching parts along line 3-3 of Figure 2.

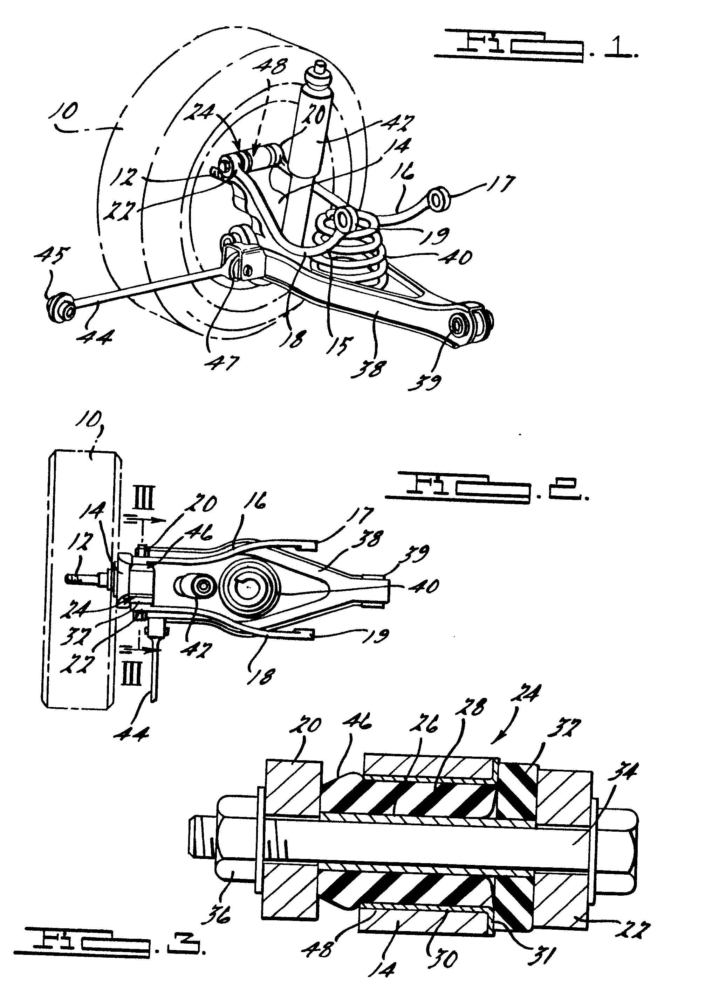

As shown in Figures 1 and 2, the multi-piece control arm may be utilized in a short-long arm type of independent suspension. Those skilled in the art will recognize, however, that many variations in control arm design are possible using the present invention. The instant control arm comprises three major components: a central bushing assembly having first and second ends for attachment to the remaining two constituent parts and first and second arm elements pivotally mounted at their inboard ends to the chassis or body and rigidly mounted at their outboard ends to the central bushing assembly.

As shown in the Figures, the independent automotive suspension for attaching a road wheel to a body or chassis comprises a wheel carrier 14 having a spindle 12 upon which wheel and tire assembly 10 is rotatably mounted. Wheel carrier 14 contains a cylindrical aperture 48 at its upper end into which central bushing assembly 24 is pressed. Lower control arm 38 runs generally transversely of the body or chassis and has a bifurcated outboard end attached to the lower end of wheel carrier 14 by means of two threaded fasteners, which are inserted through the centers of two bushing assemblies contained in the outboard ends of lower arm 38. The inboard end of lower control arm 38 is pivotally attached to the body or chassis by means of bushing assembly 39. Each of these bushing assemblies, as well as the bushing assemblies mounted at the inboard pivots 17 and 19 of upper control arm 15 bears a similarity to bushing assembly 24 inasmuch as each bushing assembly comprises a central fastener running through a case hardened inner sleeve upon which is mounted a natural rubber, cylindrically shaped bushing which is in turn surrounded by an outer steel sleeve.

Coil spring 40 is interposed between lower control arm 38 and the body or chassis. Shock absorber 42 is pivotally mounted at its lower end to control arm 38 and pivotally mounted to the body or chassis at its upper end. Longitudinal tension strut 44 is pivotally attached to the body or chassis at its leading end 45 and to lower control arm 38 at its trailing end.

Upper control arm 15 comprises central bushing assembly 24 pressed into cylindrical bore 48 and first and second arm elements 16 and 18. Central bushing assembly 24 is oriented such that its principal axis lies generally parallel to the longitudinal centerline of the body or chassis. A first or trailing arm element 16 is pivotally mounted to the body or chassis at its first or inboard end 17; second or leading arm element 18 is identically mounted at its first or inboard end 19. Arm element 18 is rigidly attached to the leading end of central bushing assembly 24 at its second or outboard end 22 and arm element 16 is rigidly attached to the trailing end of central bushing assembly 24 at its outboard end 20.

As shown in Figure 3, central bushing assembly 24 comprises inner sleeve 26 which runs between and is rigidly engaged with the second, or outboard ends 20 and 22 of arm elements 16 and 18. Inner sleeve 26 may be fabricated of case hardened low carbon steel or the like. A first generally cylindrical elastomeric bushing 28 is mounted coaxially upon a first portion of inner sleeve 26.

Bushing 28 terminates with frustro-conical section 46 at one end. Section 46 of bushing 28 is abuttingly engaged with outboard end 20 of trailing arm element 16. A second generally annular elastomeric bushing 32 is mounted coaxially upon a second portion of inner sleeve 26. Bushing 32 is abutted by outboard end 22 of leading arm element 18 and by flange 31 which is formed as part of outer sleeve 30, which may be of drawn steel. Outer sleeve 30 is mounted coaxially about bushing 28 and is pressed into cylindrical aperture 48 which is formed in wheel carrier 14. Bolt 34 and nut 36 clamp arm elements 16 and 18 and inner sleeve 26 and the remainder of the central bushing assembly together as a rigid control arm assembly.

During suspension jounce and rebound the relative rotation between wheel carrier 14 and upper control arm 15 about the longitudinal axis of central bushing assembly 24 is accommodated solely by torsional elastic shearing motion within cylindrical bushing 28. There is no metal to metal contact to cause wear of the pivoting parts.

The frustro-conical section 46 of cylindrical bushing 28 cushions shocks caused by recession of wheel and tire assembly 10 and wheel carrier 14. Because outer sleeve 30 is pressed into wheel carrier 14, recession of the wheel carrier, which may be more precisely described as rearward rotation of the wheel carrier in both horizontal and vertical planes, causes cylindrical bushing 28 to shear axially during recession while frusto-conical section 46 is compressed by end 20 of arm element 16. In this manner bushing 28 resiliently allows wheel recession in the event that the wheel and tire assembly strikes an obstruction in the roadway.

Annular bushing 32 is utilized during brake operation. Application of the brakes will cause wheel carrier 14 to rotate forward in a vertical plane. This forward rotation is undesirable, but is controlled by annular bushing 32, which is compressed between flange 31 and end 22 of arm element 18.

Bushings 28 and 32 may be formed of natural or synthetic rubber or other elastomers having a durometer value in the range of 60-65. Those skilled in the art of suspension design will appreciate that the characteristics of bushings 28 and 32 may be changed through material substitution as well as through changes in their dimensions.

First arm element 16 and second arm element 18 may be fabricated by a variety of methods including but not limited to forging. coining, casting, flame cutting and other methods. A preferred method involves a coining process of the type generally disclosed in U.S. patent 4,170,373. In this case, individual arm elements will be formed from wire which is cold worked beginning with

0182480

- 7 -

upsetting of the ends and coining to create the annular
sections for attachment to the body or chassis and the
central bushing assembly.

## CLAIMS

1.    A control arm for use in an automotive suspension having a wheel carrier (14) connected to a vehicle chassis by means of at least one control arm, characterised in that the control arm is a multi-piece control arm (16,18) which comprises a central bushing assembly (24) having first and second ends; means for mounting said bushing assembly upon said wheel carrier (14); a first arm element (16) pivotably connectible at a first end to said chassis and rigidly secured at a second end (20) to said first end of said bushing assembly (24); and a second arm element (18) pivotally connectible at a first end to said chassis and rigidly secured at a second end (22) to said second end of said bushing assembly (24).

2.    A control arm as claimed in Claim 1, wherein said central bushing assembly comprises an inner sleeve (26) running between and engaged with said second ends of said first and second arm elements (16,18), and an outer sleeve (30) retained in said wheel carrier (14).

3.    A control arm as claimed in Claim 1, wherein said central bushing assembly (24) comprises an inner sleeve (26) running between and abuttingly engaging said second ends of said first and second arm elements (16,18); a first generally cylindrical elastomeric bushing (28) mounted coaxially upon a first portion of said inner sleeve (26) and abuttingly engaged with said second end (20) of said first arm element (16); a flanged outer sleeve (30) mounted coaxially upon said first generally cylindrical elastomeric bushing (28), said sleeve (30) being of suitable diameter for non-slidable engagement with an aperture formed in said wheel carrier (14); a second generally annular elastomeric bushing (32) mounted coaxially upon a second portion of said inner sleeve (26) such that said second busing (31) is abuttingly engaged with the flange (31) of said outer sleeve (30) and said second end (22) of said second arm element (18); and means (34,36) for clampingly and rigidly engaging said second ends (20,22) of said first and second arm elements (16,18) with said central bushing assembly (24).

4.    A control arm as claimed in Claim 3, wherein said flanged outer sleeve (30) of said central bushing assembly (24) is operative to rotate relative to said second ends (20,22) of said first and second arm elements (16,18) during jounce and rebound movement of said automotive suspension.

5.    A control arm as claimed in Claim 3 or 4, wherein said means (34,36) for clampingly and rigidly engaging said second ends (20,22) of said first and second arm elements (16,18) with said central bushing assembly (24) is constructed in such a manner as to permit said second ends (20,22) of said first and second arm elements (16,18) to be dismounted from said central bushing assembly (24).

6.    A control arm as claimed in Claim 3, 4 or 5, wherein, when in use, said generally cylindrical elastomeric bushing (28) of said multi-piece control arm resiliently allows rearward rotation of said wheel carrier in vertical and horizontal planes during wheel recession.

7.    A control arm as claimed in Claim 6, wherein the portion of said generally cylindrical elastomeric bushing which is abuttingly engaged with said second end (20) of said first arm element (16) comprises a frusto-conical section (46).

8.    A control arm as claimed in any of claims 3 to 7, wherein, when in use, said generally annular elastomeric bushing (32) of said multi-piece control arm resiliently resists forward rotation of said wheel carrier (14) in a vertical plane during brake operation.

9.    An automotive suspension having a wheel carrier (14) mounted on a vehicle chassis by means of upper and lower control arms, characterised in that the upper control arm is constructed in accordance with any preceding claim.

10.    A suspension as claimed in Claim 9, further comprising a longitudinal tension strut (44) attached at its leading end (45) to said chassis and at its trailing end (47) to the lower control arm (38), means (40) interposed between said lower control arm (38) and said chassis for carrying a load; and a telescopic shock absorber (42) attached at its lower end to said lower control arm (38) and at its upper end to said chassis.

11.    A suspension as claimed in Claim 10, wherein the arm elements (16,18) of said multi-piece control arm comprise forgings.

12.    A suspension as claimed in Claim 10, wherein said arm elements (16,18) of said multi-piece control arm comprise wire having coined annular bosses at either end.

0182480

FIG. 1.

FIG. 2.

FIG. 3.